# EUROPEAN PATENT APPLICATION

(11) **EP 4 697 083 A1**
(43) Date of publication of application: **18.02.2026**
(21) Application number: 24779209.6
(22) Date of filing: 06.03.2024
(51) Int. Cl.: G02B 27/02, G02B 5/09

(54) **LIGHT GUIDE FILM AND METHOD FOR MANUFACTURING SAME**

(30) Priority: 31.03.2023 JP 2023058997
(71) Applicant: Nitto Denko Corporation, Ibaraki-shi, Osaka 567-8680 (JP)
(72) Inventor: YOSHIMOTO, Takuya, Ibaraki-shi, Osaka 567-8680 (JP); TAKEMOTO, Hiroyuki, Ibaraki-shi, Osaka 567-8680 (JP)
(74) Representative: Hoffmann Eitle
(86) International application number: PCT/JP2024/008525
(87) International publication number: WO 2024/203074

(57) **Abstract**

A light guide film X of the present invention includes a transparent resin film 10, a plurality of half-mirror (HM) thin films 21 and a plurality of HM thin films 22. The transparent resin film 10 includes a first surface 10A and a second surface 10B opposite thereto and includes array regions R1 and R2. In the array region R1, the first surface 10A includes a plurality of upright surfaces 11. The upright surfaces 11 each extend in a first direction D1 and are separated from each other in a second direction D2. In the array region R2, the first surface 10A includes a plurality of inclined surfaces 13. The inclined surfaces 13 each extend in a third direction D3 and are separated from each other in a fourth direction D4. The angle between the first direction D1 and the third direction D3 is 30° to 60°. The angle of the upright surface 11 relative to a plane direction D and the angle of the inclined surface 13 relative to the plane direction D are 85° to 90° and 20° to 70°, respectively. The HM films 21 are disposed on the upright surfaces 11, and the HM films 22 are disposed on the inclined surfaces 13.

## Description

### TECHNICAL FIELD

The present invention relates to a light guide film and a method of producing the light guide film.

### BACKGROUND ART

AR (Augmented Reality) glasses have been known. AR glasses are an eyewear-type wearable device that is attached onto the user's head. AR glasses overlay the real landscape with a digital image, and displays the overlay to the user who is wearing the AR glasses. As a result, the user can visually observe a virtually augmented world through the AR glasses.

AR glasses include a light guide plate, a microprojector, and a frame. The light guide plate is held in a position facing the user's eyes in the frame. The light guide plate has, for example, an eyeglass lens-like shape. In the frame, the microprojector is held in a position where the image light (beams of light for forming an image) can enter inside the light guide plate from a part of the light guide plate. The techniques relating to such a light guide plate of AR glasses is described, for example, in Patent Document 1 below.

### Citation List

### Patent Document

Patent Document 1: PCT International Publication No. WO2019/087576

### SUMMARY OF THE INVENTION

### PROBLEM TO BE SOLVED BY THE INVENTION

As shown in FIG. 10, the light guide plate 100 of Patent Document 1 includes inner reflection surfaces 110 and 120 and end surfaces 130 and 140. The inner reflection surfaces 110 and 120 are separated from and parallel to each other in a thickness direction H. The inner reflection surface 110 is a surface facing the user's face. The end surfaces 130 and 140 are separated from each other in one direction D' perpendicular to the thickness direction H. The direction D' is, for example, a lateral direction. Furthermore, the light guide plate 100 has a plurality of partial reflection surfaces 150 therein. The partial reflection surfaces 150 are half-mirrors. Each of the partial reflection surfaces 150 extends in a direction (for example, a vertical direction) perpendicular to the thickness direction H and the direction D', and is inclined relative to the inner reflection surfaces 110 and 120. The plurality of partial reflection surfaces 150 are spaced from and parallel to each other in the direction D'.

In the AR glasses including the light guide plate 100, an image light L' from a microprojector (not shown) is allowed to enter the light guide plate 100 at the end surface 130 through a light coupling unit (not shown). In the light guide plate 100, the image light L' from the end surface 130 repeats the total reflection at the inner reflection surfaces 110 and 120, and travels to the end surface 140. Each of the partial reflecting surfaces 150 allows a part of the image light L' traveling in the light guide plate 100 to pass through, and reflects another part of the image light L'. The image light L' reflected at a partial reflection surface 150 is emitted from the inner reflection surface 110 (the user side of the light guide plate 100) outside the light guide plate 100. In the light guide plate 100, as described above, the image light L' is replicated. In this manner, the eyebox (the range in which the user can visually observe the image) in the AR glasses is extended in the direction D'.

According to Patent Document 1, the light guide plate 100 is produced as follows.

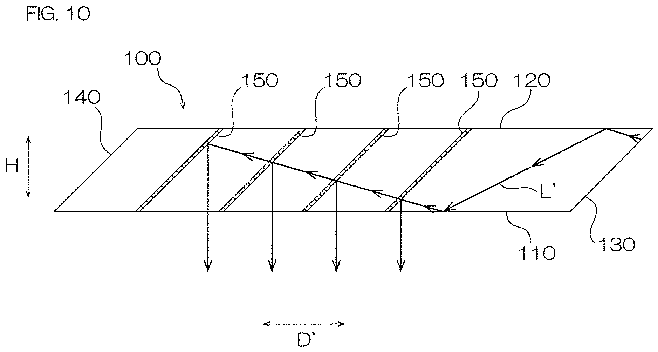

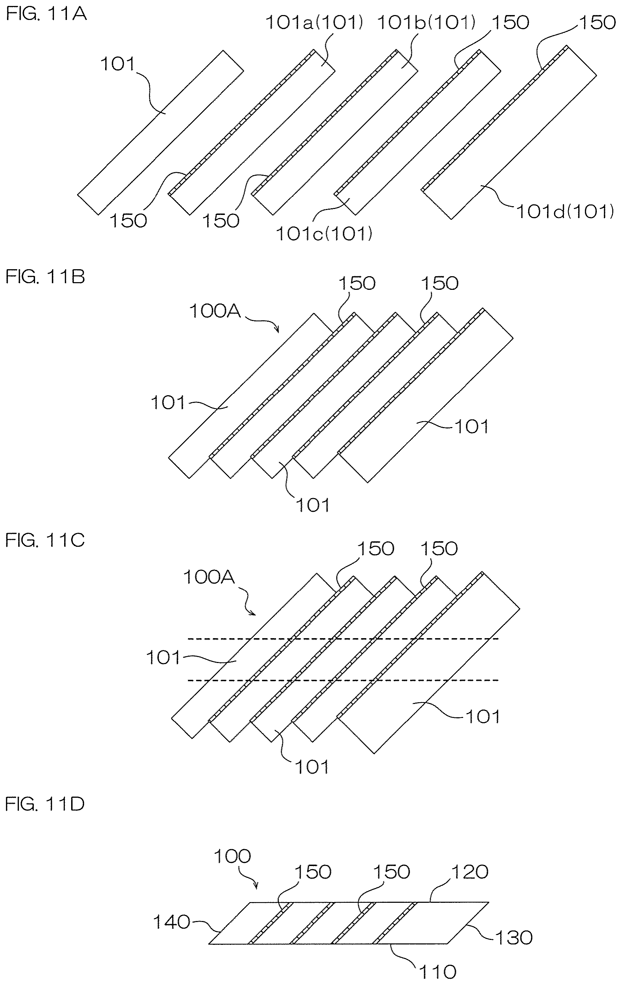

First, as shown in FIG. 11A, the required number of plates 101 is prepared (example in which 5 plates are prepared is shown). The plate 101 is made of glass or resin. Except for a plate 101 on which an end surface 130 (FIG. 10) is to be formed, on one-side surfaces of the plates 101 (plates 101a to 101d in FIG. 11A) in the thickness direction, partial reflection surfaces 150 are formed in advance. The partial reflection surfaces 150 are formed by coating a material having a predetermined refractive index difference onto the plate 101.

Next, as shown in FIG. 11B, the plurality of plates 101 are bonded to each other. Specifically, the plates 101 are bonded through an adhesive in an arrangement in which the plates 101 and the partial reflection surface 150 are alternately continue (bonding step). In this manner, a plate laminate 100A is produced.

Next, as shown in FIG. 11C, a cutting process of the plate laminate 100A is carried out (cutting process step).

According to Patent Document 1, an optical plate 100 is produced as described above. However, such a light guide plate production method requires the bonding step and cutting process step described above, and thus is not efficient. Furthermore, the guiding plate 100 of Patent Document 1 expands the eyebox in one direction. That is, the light guide plate 100 has a configuration for a one-dimensional pupil replication. The light guide plate 100 does not have a configuration for a two-dimensional pupil replication (configuration to expand the eyebox in two directions).

The present invention provides a light guide film suitable for a two-dimensional pupil replication and suitable for its efficient production, and a method of producing the light guide film.

### MEANS FOR SOLVING THE PROBLEM

The present invention [1] includes a light guide film including: a transparent resin film including a first surface and a second surface opposite to the first surface; a plurality of first half-mirror thin films; and a plurality of second half-mirror thin films, wherein the transparent resin film includes a first array region and a second array region, wherein in the first array region, the first surface includes a plurality of upright surfaces, and on the first surface, the plurality of upright surfaces each extend in a first direction, and are separated from and parallel to each other in a second direction perpendicular to the first direction, wherein an angle of the upright surface relative to a plane direction perpendicular to a thickness direction of the transparent resin film is 85° or more and 90° or less, wherein in the second array region, the first surface includes a plurality of inclined surfaces, and on the first surface, the plurality of inclined surfaces each extend in a third direction, and are separated from and parallel to each other in a fourth direction perpendicular to the third direction, wherein an angle of the inclined surface relative to the plane direction is 20° or more and 70° or less, wherein an angle that the first direction and the third direction form on the first surface is 30° or more and 60° or less, wherein the first half-mirror thin film is disposed on each of the plurality of upright surfaces, and wherein the second half-mirror thin film is disposed on each of the plurality of included surfaces.

The present invention [2] includes the light guide film described in the above-described [1], wherein the first half-mirror thin films have an optical reflectivity of 3% or more and 20% or less at a wavelength of 380 nm to 780 nm.

The present invention [3] includes the light guide film described in the above-described [1] or [2], wherein the first half-mirror thin films have a length of 5 µm or more and 100 µm or less in the thickness direction.

The present invention [4] includes the light guide film described in any one of the above-described [1] to [3], wherein an array pitch in the second direction between the plurality of first half-mirror thin films is 3 µm or more and 500 µm or less.

The present invention [5] includes the light guide film described in any one of the above-described [1] to [4], wherein the second half-mirror thin films have an optical reflectivity of 3% or more and 20% or less at a wavelength of 380 nm to 780 nm.

The present invention [6] includes the light guide film described in any one of the above-described [1] to [5], wherein the second half-mirror thin films have a length of 5 µm or more and 100 µm or less in the thickness direction.

The present invention [7] includes the light guide film described in any one of the above-described [1] to [6], wherein an array pitch in the fourth direction between the plurality of second half-mirror thin films is 3 µm or more and 500 µm or less.

The present invention [8] includes the light guide film described in any one of the above-described [1] to [7], wherein a ratio of a luminous transmittance of the light guide film at a wavelength of 380 nm to 780 nm with respect to a luminous transmittance of the transparent resin film at a wavelength 380 nm to 780 nm is 80% or more and 99% or less.

The present invention [9] includes the light guide film described in any one of the above-described [1] to [8], further including a resin layer, wherein the resin layer is disposed on the first surface and covers the first half-mirror thin films and the second half-mirror thin films.

The present invention [10] includes the light guide film described in the above-described [9], wherein a distance in the thickness direction between a surface of the resin layer on an opposite side to the transparent resin film and the first half-mirror thin films is 1 µm or more and 100 µm or less.

The present invention [11] includes the light guide film described in the above-described [9] or [10], wherein a distance in the thickness direction between a surface of the resin layer on an opposite side to the transparent resin film and the second half-mirror thin films is 1 µm or more and 100 µm or less.

The present invention [12] includes the light guide film described in any one of the above-described [9] to [11], further including: a first low refractive index layer and a second low refractive index layer, wherein the first low refractive index layer is disposed on a surface of the resin layer on an opposite side to the transparent resin film, and has a lower refractive index than a refractive index of the resin layer, and wherein the second low refractive index layer is disposed on the second surface, and has a lower refractive index than a refractive index of the transparent resin film.

The present invention [13] includes a method of producing the light guide film described in any one of the above-described [1] to [12], the method including: a preparation step of preparing a transparent resin film including a first surface and a second surface opposite to the first surface; an imprint transfer step of pressing an imprint mold against the first surface of the transparent resin film after the preparation step; a film formation step of forming a half-mirror layer on the first surface of the transparent resin film after the imprint transfer step; and a patterning step of patterning the half-mirror layer, wherein the imprint mold includes a first mold surface and a second mold surface, and the first mold surface corresponds to an uneven-surface shape of the first array region, and the second mold surface corresponds to an uneven-surface shape of the second array region, wherein in the imprint transfer step, the first mold surface and the second mold surface are pressed against the first surface to form the first array region and the second array region on the first surface, and wherein in the patterning step, the first half-mirror thin films on the upright surfaces and the second half-mirror thin films on the inclined surfaces are formed from the half-mirror layer.

The present invention [14] includes the method described in the above-described [13], further including: a resin layer formation method of forming a resin layer covering the first half-mirror thin films and the second half-mirror thin films on the first surface.

The present invention [15] includes the method described in the above-described [14], further including: a first low refractive index layer formation step of forming a first low refractive index layer having a lower refractive index than a refractive index of the resin layer on the resin layer.

The present invention [16] includes the method described in any one of the above-described [13] to [15], further including: a second low refractive index layer formation step of forming a second low refractive index layer having a lower refractive index than a refractive index of the transparent resin film on the second surface.

### EFFECTS OF THE INVENTION

In the light guide film of the present invention, as described above, the transparent resin film includes the first array region and the second array region. In the first array region, the first surface includes a plurality of upright surfaces, and the plurality of upright surfaces each extend in the first direction, and are separated from and parallel to each other in the second direction perpendicular to the first direction. The angle of each of the upright surfaces relative to the plane direction perpendicular to the thickness direction of the transparent resin film is 85° or more and 90° or less. On each of the plurality of upright surfaces, the first half-mirror (first HM) thin film is disposed. The first array region with the first HM thin film is suitable for reflecting the image light toward the second array region while replicating the image light in one direction (the first replication direction) in the propagation process of the image light in which the image light enters the first array region of the transparent resin film and propagates in the same region.

Furthermore, in the second array region, the first surface includes a plurality of inclined surfaces, the plurality of inclined surfaces each extend on the first surface in the third direction, and are separated from and parallel to each other in the fourth direction perpendicular to the third direction. The angle of each of the inclined surfaces relative to the plane direction is 20° or more and 70° or less. On each of the plurality of inclined surfaces, the second half-mirror (second HM) thin film is disposed. Then, on the first surface, the angle that the third direction (extension direction in which the inclined surfaces of the second array region extend) forms relative to the first direction (extension direction in which the upright surfaces of the first array region extend) is 30° or more and 60° or less. The second array region with the second HM thin film is suitable for reflecting the image light toward the outside of the light guide film while replicating the image light in one direction (the second replication direction intersecting with the first replication direction) in a process in which the image light (replicated in the first replication direction) from the first array region propagates in the second array region. Therefore, the light guide film is suitable for a two-dimensional pupil replication (a two-dimensional pupil replication in the first replication direction and the second replication direction) of the image light.

In addition, the first array region and the second array region of the light guide film can be formed by pressing an imprint mold including a first mold surface corresponding to the uneven-surface shape of the first array region and a second mold surface corresponding to the uneven surface of the second array region onto the first surface of the transparent resin film (imprint transfer step). That is, the production of the light guide film does not require the bonding step (FIG. 11B) and cutting process step (FIG. 11C) described above regarding the prior art. Therefore, the light guide film is suitable for its efficient production.

As described above, the light guide film of the present invention is suitable for a two-dimensional pupil replication and for its efficient production.

The method of producing the light guide film of the present invention includes the above-described preparation step, imprint transfer step, film forming step, and patterning step. In the imprint transfer step, the first mold surface and second mold surface of the imprint mold are pressed against the first surface of the transparent resin film to form the first array region and the second array region on the first surface. Therefore, the present production method does not require the bonding step (FIG. 11B) and cutting process step (FIG. 11C) described above regarding the prior art. Such a production method is suitable for efficiently producing the above-described light guide film.

### BRIEF DESCRIPTION OF THE DRAWINGS

FIG. 1 is a plan view of one embodiment of a light guide film of the present invention.
FIG. 2 is a partial cross-sectional view along line II-II of FIG. 1.
FIG. 3 is a partial cross-sectional view along line III-III of FIG. 1.
FIG. 4 is a partially enlarged view of FIG. 3 (when the angle β₁ is 45° or more).
FIG. 5 is a partially enlarged view of FIG. 3 (when the angle β₁ is less than 45°).
FIGS. 6 shows a method of producing the light guide film shown in FIG. 1. FIG. 6A shows a transparent resin film preparation step, FIG. 6B shows an imprint transfer step, and FIG. 6C shows a half-mirror layer formation step (film formation step).
FIGS. 7 shows the steps subsequent to the step shown in FIG. 6C. FIG. 7A shows a patterning step. FIG. 7B shows a resin layer formation step. FIG. 7C shows a first low refractive index layer formation step. FIG. 7D shows a second low refractive index layer formation step.
FIG. 8 is a partial cross-sectional view of a modified example of the light guide film shown in FIG. 1. In this modified example, the light guide film does not include a first low refractive index layer.
FIG. 9 is a partial cross-sectional view of another modified example of the light guide film shown in FIG. 1. In this modified example, the light guide film does not include a second low refractive index layer.
FIG. 10 is a cross-sectional view of a light guide plate for conventional AR glasses.
FIG. 11 shows a method of producing the light guide plate shown in FIG. 10.

### DESCRIPTION OF THE EMBODIMENT

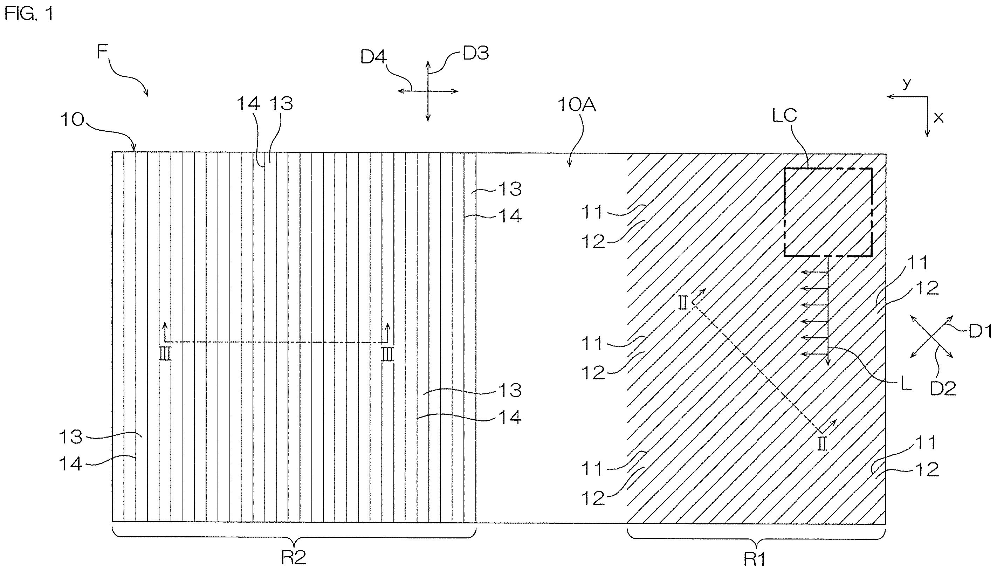

As shown in FIGS. 1 to 3, a light guide film F as one embodiment of the present invention includes a transparent resin film 10, a plurality of half-mirror thin films 21 (the first half-mirror thin films), and a plurality of half-mirror thin films 22 (the second half-mirror thin films). In the present embodiment, the light guide film F further includes a resin layer 10', a low refractive index layer 31 (a first low refractive index layer), and a low refractive index layer 32 (a second low refractive index layer) (in FIG. 1, the resin layer 10' and the low refractive index layers 31 and 32 are omitted). The light guide film F specifically includes the low refractive index layer 32, the transparent resin film 10, the half-mirror (HM) thin films 21 and 22, the resin layer 10', and the low refractive index layer 31 in this order in a thickness direction H. The light guide film F extends in a direction (plane direction D) perpendicular to the thickness direction H. The light guide film F has a predetermined plan view shape (the drawing shows illustratively the case where the plan view shape of the light guide film F is rectangular). The light guide film F is a light guide plate for AR glasses. The AR glasses include, for example, a light guide plate (light guide film F), a light coupling unit, a microprojector, and a frame holding them.

The transparent resin film 10 is a substrate of the light guide film F. The transparent resin film 10 has a first surface 10A, a second surface 10B opposite to the first surface 10A. The first surface 10A and the second surface 10B are separate from each other in the thickness direction H. The transparent resin film 10 includes an array region R1 (first array region), and an array region R2 (second array region) (the drawing shows illustratively in the case where the plan view of the array regions R1 and R2 is rectangular). In the present embodiment, the array regions R1 and R2 are adjacent to each other in a longitudinal direction of the light guide film F.

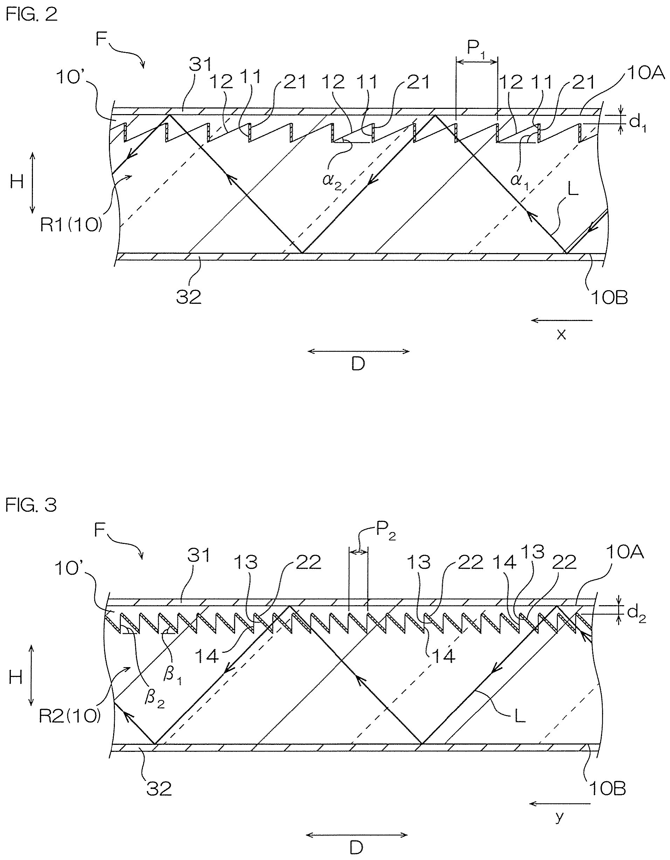

As shown in FIG. 2, the first surface 10A in the array region R1 includes a plurality of upright surfaces 11 and a plurality of surfaces 12. In the cross-sectional view shown in FIG. 2, the upright surfaces 11 and the surfaces 12 are alternately and continuously arranged to form into a shape of a plurality of prisms (or a shape of saw blade teeth) continuous in the plane direction D.

As shown in FIG. 1, the plurality of upright surfaces 11 each extend in the first direction D1 on the first surface 10A and are separated from each other in a second direction D2 perpendicular to the first direction D1. The plurality of upright surfaces 11 are parallel to each other. As shown in FIG. 2, the angular α₁ of the upright surface 11 relative to the plane direction D corresponds to the inclination angle of the HM thin film 21 described below. The angular α₁ of the upright surface 11 is 85° or more and 90° or less, preferably 88° or more and 90° or less, more preferably 90° from the viewpoint of suppressing the image blurring of the image light L (light beams for forming images) to be viewed by the user and described below.

As shown in FIG. 1, the plurality of surfaces 12 each extend in the first direction D1 on the first surface 10A, and are separated from each other in the second direction D2 perpendicular to the first direction D1. The surfaces 12 may be flat surfaces or curved surfaces. From the viewpoint of properly forming the HM thin films 21 on the upright surfaces 11, the surfaces 12 are preferably flat surfaces. The angle α₂ of the surface 12 as a flat surface relative to the plane direction D is set according to dimensions including the angle α₁ of the upright surface 11, the array pitch p₁ of the HM thin films 21, and the width of the HM film 21. The angular α₂ is, for example, 20° or more and 40° or less.

As shown in FIG. 3, the first surface 10A in the array region R2 includes a plurality of inclined surfaces 13 and a plurality of surfaces 14. In the cross-sectional view shown in FIG. 3, the inclined surfaces 13 and the surfaces 14 are alternately and continuously arranged to form into a shape of a plurality of prisms (or a shape of saw blade teeth) continuous in the plane direction D.

As shown in FIG. 1, the plurality of inclined surfaces 13 each extend in a third direction D3 on the first surface 10A, and are separated from each other in a fourth direction D4 perpendicular to the third direction D3. The plurality of inclined surfaces 13 are parallel to each other. As shown in FIG. 3, the angle β₁ of the inclined surface 13 relative to the plane direction D corresponds to the inclination angle of the HM thin film 22 described below. The angle β₁ of the inclined surface 13 is 20° or more and 70° or less from the viewpoint of appropriately emitting the image light L after the two-dimensional replication outside the light guide film F.

As shown in FIG. 1, the plurality of surfaces 14 each extend in the third direction D3 on the first surface 10A, and are separated from each other in the fourth direction D4 perpendicular to the third direction D3. The surfaces 14 may be flat surfaces or curved surfaces. From the viewpoint of properly forming the HM thin films 22 on the inclined surfaces 13, the surfaces 14 are preferably flat surfaces. The angle β₂ of the surface 14 as a flat surface relative to the plane direction D is set according to dimensions including the angle β₁ of the inclined surface 13, the array pitch p₂ of the HM thin films 22, and the width of the HM film 22. The angle β₂ is, for example, 80° or more and 90° or less.

On the first surface 10A, an angle γ formed between the first direction D1 (extension direction in which the upright surfaces 11 extend) and the third direction D3 (extension direction in which the inclined surfaces 13 extend) is 30° or more, preferably 40° or more, more preferably 43° or more, and 60° or less, preferably 50° or less, more preferably 47° or less from the viewpoint of appropriately propagating the image light L from the array region R1 to the array region R2.

Examples of the material of the transparent resin film 10 include a thermoplastic resin and a thermosetting resin. In the imprint transfer step described later, from the viewpoint of appropriately forming the uneven-surface shapes of the array regions R1 and R2, the material of the transparent resin film 10 is preferable a thermoplastic resin.

The transparent resin film 10 has a refractive index of, for example, 1.2 or more, preferably 1.5 or more, and, for example, 2.8 or less, preferably 2.5 or less, from the viewpoint of implementing appropriate light guide in the light guide film F.

The transparent resin film 10 has a thickness (a maximum value in the thickness direction H) of, for example, 0.1 mm or more, preferably 1.0 mm or more, and, for example, 5.0 mm or less, preferably 2.0 mm or less.

The HM thin film 21 is located on each of the plurality of upright surfaces 11. Each of the HM thin films 21 is preferably disposed on the entire surface of one upright surface 11. The HM thin films 21 allows a part of the image light L traveling in the light guide film F to pass through, and reflects the other part of the image light L. That is, the HM thin films 21 have both reflectivity and transmittivity with respect to the image light L. The HM thin films 21 are formed from a high refractive index material with a greater refractive index than the transparent resin film 10, or a low refractive index material with a smaller refractive index than the transparent resin film 10. Examples of the high refractive index material include titanium oxide and niobium oxide. Examples of the low refractive index material include nanovoid silica. The material of the HM thin films 21 is preferably nanovoid silica. The above about the material of the HM thin film 21 applies to the material of the HM thin films 22 described below.

The refractive index difference between the HM thin films 21 and the transparent resin film 10 and the resin layer 10' is, for example, 0.1 to 2 from the viewpoint of the balance between the transmission and reflection of the image light L on the HM thin films 21.

The thickness of the HM thin film 21 is preferably 1 µm or more, more preferably 3 µm or more, and preferably 10 µm or less, more preferably 8 µm or less from the viewpoint of the balance between the transmission and reflection of the image light L on the HM thin film 21.

The optical reflectivity of the HM thin films 21 at a wavelength of 380 nm to 780 nm is preferably 3% or more, more preferably 7% or more, even more preferably 10% or more from the viewpoint of ensuring the reflection amount (light intensity) of the image light L from the HM thin films 21 toward the array region R2. The optical reflectivity of the HM thin films 21 at a wavelength of 380nm to 780nm is preferably 20% or less, more preferably 17% or less, even more preferably 15% or less from the viewpoint of suppressing the decay of the image light L when the image light L is passing through HM thin films 21.

The HM thin films 21 have a length h₁ in the thick direction H of preferably 5 µm or more, more preferably 10 µm or more from the viewpoint of suppressing the image blurring due to light scattering. The length h₁ is preferably 100 µm or less, more preferably 80 µm or less from the viewpoint of suppressing the decay of the image light L when the image light L is passing through HM thin films 21.

The array pitch p₁ in the second direction D2 between the plurality of HM thin films 21 is preferably 3 µm or more, more preferably 10 µm or more, even more preferably 20 µm or more from the viewpoint of suppressing the image blurring due to light scattering. The array pitch p₁ is a distance between the end portions of the adjacent HM thin films 21 and 21 on the low refractive index layer 31 side (the upper end side of the drawing). The array pitch p₁ is preferably 500 µm or less, more preferably 300 µm or less, and even more preferably 100 µm or less from the viewpoint of ensuring visibility of the real landscape.

The HM thin film 22 is disposed on each of the plurality of inclined surface 13. Each of the HM thin films 22 is preferably disposed on the entire surface of one inclined surface 13. The HM thin films 22 allows a part of the image light L travelling in the light guide film F to pass through, and reflects the other part of the image light L. That is, the HM thin films 22 have both reflectivity and transmittivity with respect to the image light L.

The refractive index difference between the HM thin films 22 and the transparent resin film 10 and the resin layer 10' is, for example, 0.1 to 2 from the viewpoint of the balance between the transmission and reflection of the image light L on the HM thin films 22.

The HM thin film 22 have a thickness of preferably 1 µm or more, more preferably 3 µm or more, and preferably 10 µm or less, more preferably 8 µm or less from the viewpoint of the balance between the transmission and reflection of the image light L on the HM thin films 22.

The optical reflectivity of the HM thin films 22 at a wavelength of 380 nm to 780 nm is preferably 3% or more, more preferably 7% or more, even more preferably 10% or more from the viewpoint of ensuring the reflection amount (light intensity) of the image light L from the HM thin films 22 to the outside of the light guide film F. The optical reflectivity of the HM thin films 22 at a wavelength of 380 nm to 780 nm is preferably 20% or less, more preferably 17% or less, even more preferably 15% or less from the viewpoint of suppressing the decay of the image light L when the image light L is passing through the HM thin films 22.

The HM thin film 22 has a length h₂ in the thick direction H of preferably 5 µm or more, more preferably 10 µm or more from the viewpoint of suppressing the image blurring due to light scattering. The length h₂ is preferably 100 µm or less, more preferably 80 µm or less in order to limit the angle β₁ of the inclined surface 13 to 70° or less.

The array pitch p₂ between the plurality of HM thin films 22 in the second direction D2 is preferably 3 µm or more, more preferably 10 µm or more, even more preferably 20 µm or more from the viewpoint of suppressing the image blurring due to light scattering. The array pitch p₂ is a distance between the end portions of the adjacent HM thin films 22 and 22 on the low refractive index layer 31 side (the upper end side of the drawing). The array pitch p₂ is preferably 500 µm or less, more preferably 300 µm or less, and even more preferably 100 µm or less from the viewpoint of ensuring visibility of the real landscape.

The resin layer 10' is disposed on the first surface 10A and covers the HM thin films 21 and the HM thin films 22. The transparent resin film 10 and the resin layer 10' form a light guide media portion in the light guide film F. The resin layer 10' has a surface 10C opposite to the transparent resin film 10. The surface 10C is a flat surface in this embodiment. The surface 10C is a surface facing the side of the user's eyes. The second surface 10B of the transparent resin film 10 and the surface 10C of the resin layer 10' are parallel to each other in this embodiment. The second surface 10B and the surface 10C are inner reflection surfaces facing each other.

Examples of the material of the resin layer 10' include a thermoplastic resin and a thermosetting resin. The material of the resin layer 10' and the material of the transparent resin film 10 are preferably the same. The resin layer 10' has a refractive index of, for example, 1.2 or more, preferably 1.5 or more, and, for example, 2.8 or less, preferably 2.5 or less from the viewpoint of implementing appropriate light guide in the light guide film F. The refractive index of the resin layer 10' and the refractive index of the transparent resin film 10 are preferably the same.

The distance d₁ between the surface 10C of the resin layer 10' and the HM thin films 21 in the thickness direction H is preferably 1 µm or more, more preferably 5 µm or more from the viewpoint of protecting the HM thin films 21. Furthermore, the distance d₂ is preferably 100 µm or less, more preferably 70 µm or less from the viewpoint of thinning of the light guide film F.

The low refractive index layer 31 is disposed on the surface 10C of the resin layer 10'. The low refractive index layer 31 is in contact with the surface 10C. The low refractive index layer 31 preferably covers the entire surface 10C. In this embodiment, the refractive index of the low refractive index layer 31 is lower than the refractive index of the resin layer 10'. From the viewpoint of properly implementing the total reflection of the image light L on the surface 10C, the refractive index of the low refractive index layer 31 is preferably 1.3 or less, and more preferably 1.2 or less as long as being lower than the refractive index of the resin layer 10'. From the viewpoint of properly implementing the total reflection of the image light L on the surface 10C, the difference between the refractive index of the resin layer 10' and the refractive index of the low refractive index layer 31 is, for example, 0.1 to 2 as long as being lower than the refractive index of the resin layer 10'.

Examples of the material of the low refractive index layer 31 include nanovoid silica, and preferably nanovoid silica is used (the same applies to the material of the low refractive index layer 32 described later).

The low refractive index layer 31 has a thickness of preferably 1 µm or more, more preferably 2 µm or more from the viewpoint of properly implementing the total reflection of the image light L on the surface 10C. The thickness of the low refractive index layer 31 is, for example, 100 µm or less from the viewpoint of ensuring the see-through property (transmittivity of the light beams derived from the real landscape) of the light guide film F.

The low refractive index layer 32 is disposed on the second surface 10B of the transparent resin film 10. The low refractive index layer 32 is in contact with the second surface 10B. The low refractive index layer 32 preferably covers the entire surface of the second surface 10B. In this embodiment, the refractive index of the low refractive index layer 32 is lower than that of the transparent resin film 10. From the viewpoint of appropriately implementing the total reflection of the image light L on the second surface 10B, the refractive index of the low refractive index layer 32 is preferably 1.3 or less, more preferably 1.2 or less as long as being smaller than the refractive index of the transparent resin film 10. From the viewpoint of properly implementing the total reflection of the image light L on the second surface 10B, the difference between the refractive index of the transparent resin film 10 and the refractive index of the low refractive index layer 32 is, for example, 0.1 to 2 as long as being lower than the refractive index of the transparent resin film 10.

The low refractive index layer 32 has a thickness of preferably 1 µm or more, more preferably 2 µm or more from the viewpoint of properly implementing the total reflection of the image light L on the second surface 10B. The thickness of the low refractive index layer 32 is, for example, 100 µm or less from the viewpoint of ensuring the see-through property (transmittivity of the light beams derived from the real landscape) of the light guide film F.

The ratio of the luminous transmittance of the light guide film F at a wavelength of 380 nm to 780 nm with respect to the luminous transmittance of the transparent resin film 10 at a wavelength 380 nm to 780 nm is preferably 80% or more, more preferably 85% or more, and even more preferably 90% or more, and, for example, 100% or less, preferably 99% or less. Such a configuration is preferable in order to ensure a high see-through property in the light guide film F.

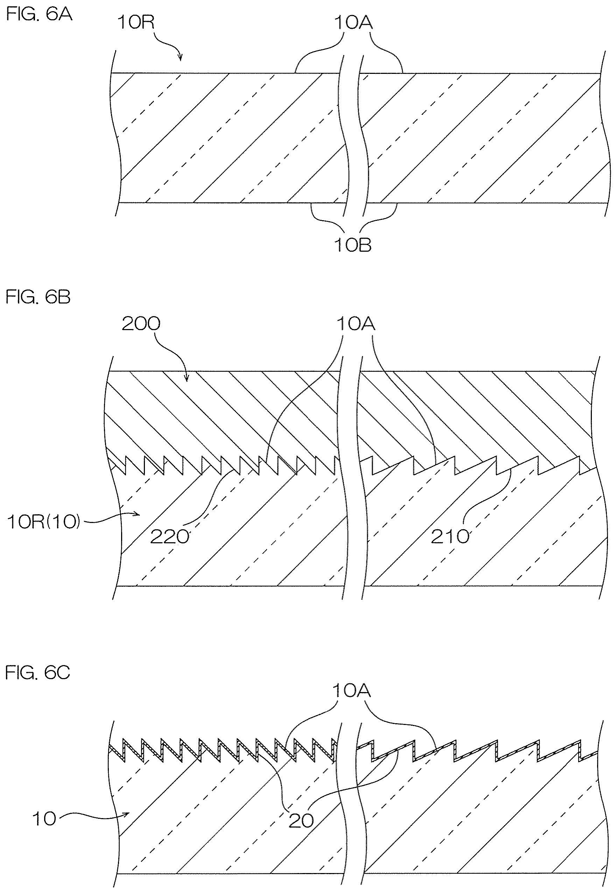

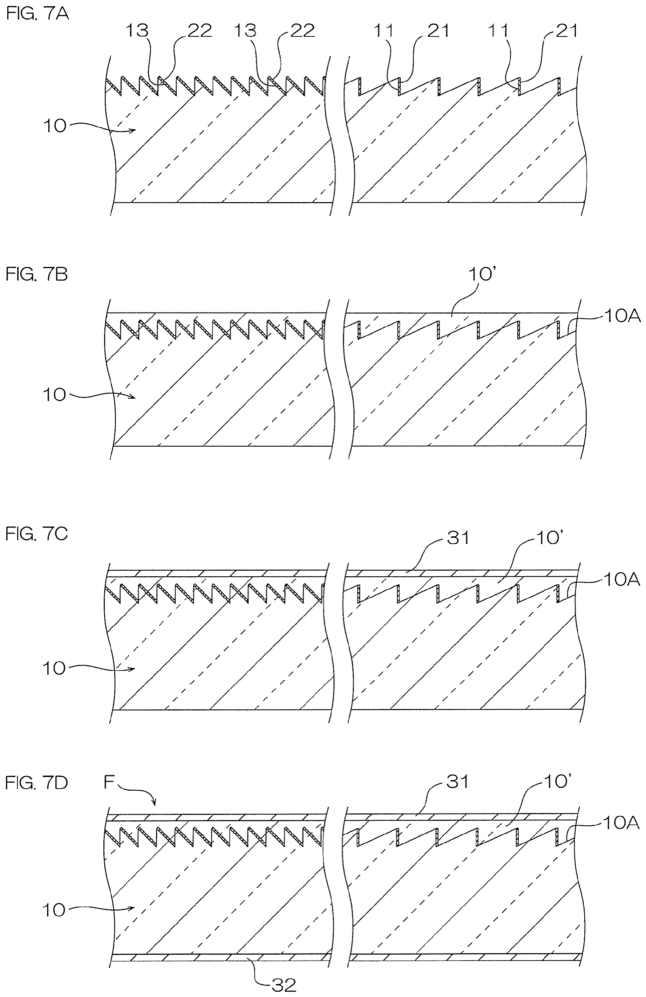

FIGS. 6A to 7D show a method of producing the light guide film F. In the present embodiment, this production method includes a preparation step (FIG. 6A), an imprint transfer step (FIG. 6B), a film formation step (FIG. 6C), a patterning step (FIG. 7A), a resin layer formation step (7B), a first low refractive index layer formation step (FIG. 7C), and a second low refractive index layer formation step (FIG. 7D) in this order.

In the preparation step, as shown in FIG. 6A, a transparent plastic film 10R is prepared. The transparent resin film 10R is a raw material film of the transparent resin film 10. Examples of the material of the transparent resin film 10R include the materials described above regarding the transparent resin film 10. The transparent resin film 10R has a first surface 10A and a second surface 10B opposite to the first surface 10A.

In the imprint transfer step, as shown in FIG.6B, an imprint mold 200 is pressed against the first surface 10A of the transparent resin film 10R. The imprint mold 200 has a first mold surface 210 and a second mold surface 220. The first mold surface 210 has an uneven-surface shape corresponding to the uneven-surface shape of the above-described array region R1 in the transparent resin film 10. The second mold surface 220 has an uneven-surface shape corresponding to the uneven-surface shape of the above-described array region R2 in the transparent resin film 10. In the imprint transfer step, by pressing the first mold surface 210 and the second mold surface 220 against the first surface 10A of the transparent resin film 10, the array region R1 and the array region R2 are formed on the first surface 10A. In this manner, a transparent resin film 10 is produced.

In the present step, the transparent resin film 10R is preferably heated. The heating temperature is a temperature at which the transparent resin film 10R is sufficiently softened, and also a temperature at which excessive thermal expansion and/or thermal deformation of the transparent resin film 10R are/is suppressed.

In the film formation step, as shown in FIG. 6C, a material is film-formed on the first surface 10A of the transparent resin film 10, thereby forming a half-mirror layer 20 thereon. Examples of the material of the half-mirror layer 20 include the materials described above regarding the HM thin films 21 and 22. The half-mirror layer 20 has the thickness described above regarding the HM thin films 21 and 22. Examples of the method of forming the half-mirror layer 20 include a vacuum vapor deposition method and a sputtering method.

In the patterning step, as shown in FIG. 7A, a plurality of HM thin films 21 and a plurality of HM thin films 22 are formed from the half-mirror layer 20 (FIG. 7B). Specifically, by patterning the half-mirror layer 20, an HM thin film 21 is formed on each of the upright surfaces 11, and an HM thin film 22 is formed on each of the inclined surfaces 13. In the present step, for example, the half-mirror layer 20 is etched through a predetermined etching mask. In this manner, the half-mirror layer 20 can be patterned. Examples of the etching method include plasma etching. By the present step, a transparent resin film 10 with the HM thin films 21 and 22 is produced. The transparent resin film 10 with the HM thin films 21 and 22 is a light guide film as an intermediate product in the production process of a light guide film F.

In the resin layer formation step, as shown in FIG. 7B, a resin layer 10' is formed on the first surface 10A of the transparent resin film 10. The resin layer 10' is formed so as to cover the HM thin films 21 and the HM thin films 22. The resin layer 10' can be formed, for example, by a predetermined coating method.

In the first low refractive index layer formation step, as shown in FIG. 7C, a low refractive index layer 31 is formed on the resin layer 10'. The low refractive index layer 31 can be formed, for example, by a spray coating method. Specifically, a coating film is formed by a spray coating of a liquid low refractive index layer forming material on the surface 10C of the resin layer 10', and thereafter the coating film is dried, thereby forming a low refractive index layer 31.

In the second low refractive index layer formation step, as shown in FIG. 7D, a low refractive index layer 32 is formed on the second surface 10B of the transparent resin film 10. The low refractive index layer 32 can be formed, for example, by a spray coating method. Specifically, a coating film is formed by a spray coating of a liquid low refractive index layer forming material on the second surface 10B of the transparent resin film 10, and thereafter the coating film is dried, thereby forming a low refractive index layer 32.

As described above, a light guide film F is produced.

In the present production method, instead of the above-described film formation step (FIG. 6C) and patterning step (FIG. 7A), a resist pattern formation step, another film formation step, and a resist pattern removal step may be carried out in this order. In the resist pattern formation step, a resist pattern having an opening and corresponding to the pattern shape of the HM thin films 21 and 22 is formed on the first surface 10A of the transparent resin film 10. In the film formation step, a material is film-formed on the first surface 10A of the transparent resin film 10 through the resist pattern, thereby forming the HM thin films 21 on the upright surfaces 11, and forming the HM thin films 22 on the inclined surfaces 13. Thereafter, the resist pattern is removed (resist pattern removal step). In addition, the first low refractive index layer formation step (FIG. 7C) and the second low refractive index layer formation step (FIG. 7D) in this production method may be carried out in the order of the second low-refractive index layer formation step and the first low-refractive index layer formation step.

In the AR glasses with a light guide film F, an image light L from the microprojector (not shown) enters into the array region R1 of the light guide film F through the light coupling unit LC (shown schematically with a phantom line in FIG. 1). The light coupling unit LC is disposed, for example, on the low refractive index layer 31 of the light guide film F (FIG. 2). The light coupling unit LC is, for example, a prism in a predetermined shape. The light coupling unit LC allows the image light L to enter the light guide film F so that the image light L propagates in the light guide film F in the x-direction in a plan view shown in FIG. 1.

As shown in FIG. 2, the image light L incident in the light guide film F repeats the total reflection on the second surface 10B and surface 10C, thereby propagating in the array region R1 in the x-direction. As shown in FIG. 1, each of the HM thin films 21 allows a part of the image light L travelling in the light guide film F to pass through, and reflects the other part of the image light L toward the array region R2. The reflection on the HM thin films 21 replicates the image light L as the reflected light. That is, a plurality of HM thin films 21 replicates the image light L. By the plurality of HM thin films 21 in the array region R1, the image light L is replicated in the x direction.

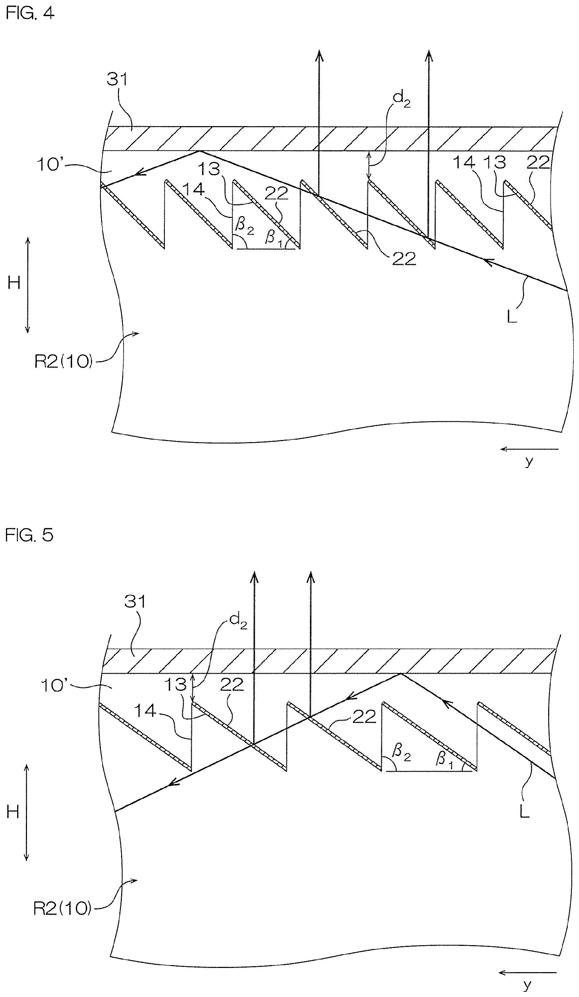

As shown in FIG. 3, in the array-area R2, the image light L propagates in the y direction by repeating the total reflection on the second surface 10B and the surface 10C. Each of the HM thin films 22 allows a part of the image light L travelling in the light guide film F to pass through, and reflects the other portion of the image light L toward the surface 10C side. FIG. 4 shows an example where the angle β₁ of the inclination of the HM thin films 22 is 45° or more. FIG. 5 shows an example where the angle β₁ of the inclination of the HM thin films 22 is less than 45°. The reflection on the HM thin films 22 replicates the image light L as the reflected light. That is, the plurality of HM thin films 22 replicates a plurality of the image lights L. The plurality of HM thin films 22 in the array region R2 replicates the image light L in the y direction. The image light L reflected on the HM thin films 22 passes through the surface 10C and the low refractive index layer 31 and is emitted outside the light guide film F (because the incident angle relative to the surface 10C and the low refractive index layer 31 is small, the image light L is not totally reflected on the surface 10C).

In the manner as described above, the image light L emitted outside the light guide film F is replicated in two directions (two-dimensional pupil replication). In this manner, the eyebox (the range in which the user can visually observe the image) in the AR glasses is expanded in two directions in the plane direction D.

As described above, in the light guide film F, the transparent resin film 10 includes the array region R1 and array region R2. As described above, in the array region R1, the first surface 10A includes a plurality of upright surfaces 11, and the plurality of upright surfaces 11 each extend in the first direction D1 on the first surface 10A, and are separated from and parallel to each other in the second direction D2 perpendicular to the first direction D1. The angle α₁ of the upright surface 11 relative to the plane direction D is 85° or more and 90° or less. An HM thin film 21 is disposed on each of the plurality upright surfaces 11. Such an array region R1 with the HM thin films 21 is suitable for reflecting the image light L toward the array region R2 while replicating the image light L in one direction (the first replication direction) in the propagation process of the image light L in which the image light L enters the array region R1 of the transparent resin film 10 and propagates in the same region.

Furthermore, as described above, in the array region R2, the first surface 10A includes a plurality of inclined surfaces 13, and on the first surface 10A, the plurality of inclined surfaces 13 each extend in the third direction D3, and are separated from and parallel to each other in the fourth direction D4 perpendicular to the third direction D3. The angle β₁ of the inclined surface 13 relative to the plane direction D is 20° or more and 70° or less. An HM thin film 22 is disposed on each of the plurality of inclined surfaces 13. Then, on the first surface 10A, the angle γ which the third direction D3 (extension direction in which the inclined surfaces 13 extend in the array region R2) forms relative to the first direction D1 (extension direction in which the upright surfaces 11 extend in the array region R1) is 30° or more and 60° or less. Such an array region R2 with the HM thin films 22 is suitable for reflecting the image light L toward the outside of the light guide film F while replicating the image light L in one direction (the second replication direction intersecting with the first replication direction) in the process in which the image light L (which is replicated in the first replication direction) from the array region R1 propagates in the array region R2. Therefore, the light guide film F is suitable for the two-dimensional pupil replication of the image light L (two-dimensional replication in the first replication direction and the second replication direction).

In addition, the array region R1 and the array region R2 of the light guide film F can be formed, as described above, by pressing the imprint mold 200 against the first surface 10A of the transparent resin film 10 (imprint transfer step). That is, the production of the light guide film F does not require the bonding step (FIG. 11B) and the cutting process step (FIG. 11C) described above regarding the prior art. Therefore, the light guide film F is suitable for its efficient production.

As described above, the light guide film F is suitable for a two-dimensional pupil replication and its efficient production.

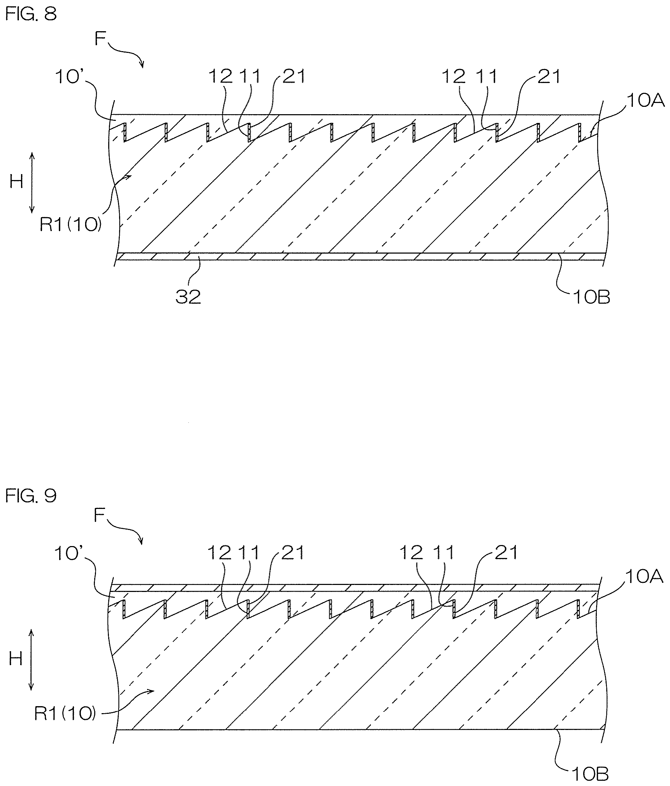

As shown in FIG. 8, the light guide film F may not have a low refractive index layer 31 on the surface 10C of the resin layer 10'. From the viewpoint of suppressing the decrease in the total reflectivity of the image light on the surface 10C due to the attachment of a foreign matter (e.g., a water drop) to the surface 10C, the light guide film F preferably has a low refractive index layer 31.

As shown in FIG. 9, the light guide film F may not have a low refractive index layer 32 on the second surface 10B of the transparent resin film 10. The light guide film F shown in FIG. 9 may be combined with another substrate as a composite. Specifically, the second surface 10B side of the light guide film F may be bonded to the surface of the other substrate. The substrate is, for example, thicker than the light guide film F. Examples of the material of the substrate include resin, glass, and thin glass. When the light guide film F and the other substrate are combined as a composite, preferably a layer (low refractive index layer) having a lower refractive index than that of the substrate is formed on the surface of the substrate on the opposite side to the light guide film F. On the other hand, when the light guide film F is not combined with another substrate as a composite, the light guide film F preferably has a low refractive index layer 32 as shown in FIG. 1 from the viewpoint of suppressing the decrease in the total reflectivity of the image light on the second surface 20B due to the attachment of a foreign matter (e.g. a water drop) to the second surface 10B of the light guide film F.

While the illustrative embodiments of the present invention are provided in the above description, such is for illustrative purpose only and it is not to be construed as limiting in any manner. Modification and variation of the present invention that will be obvious to those skilled in the art is to be covered by the following claims.

### Industrial Applicability

The light guide film of the present invention is used, for example, for AR glasses. The method of producing the light guide film of the present invention is used for the production of a light guide film.

### Description of Reference Numerals

- X: Light guide film
- H: Thickness direction
- D: Plane direction
- D1: First direction
- D2: Second direction
- D3: Third direction
- D4: Fourth direction
- 10: Transparent substrate film
- R1: Array region (First array region)
- R2: Array region (Second array region)
- 10A: First surface
- 10B: Second surface
- 11: Upright surface
- 13: Inclined surface
- 10': Resin layer
- 10C: Surface
- 21: Half-mirror thin film (first half-mirror thin film)
- 22: Half-mirror thin film (second half-mirror thin film)
- 31: Low refractive index layer (first low refractive index layer)
- 32: Low refractive index layer (second low refractive index layer)
- 70: Imprint mold
- 71: First mold surface
- 72: Second mold surface

## Claims

1. A light guide film comprising:
a transparent resin film including a first surface and a second surface opposite to the first surface;
a plurality of first half-mirror thin films; and
a plurality of second half-mirror thin films,
wherein the transparent resin film includes a first array region and a second array region,
wherein in the first array region, the first surface includes a plurality of upright surfaces, and on the first surface, the plurality of upright surfaces each extend in a first direction, and are separated from and parallel to each other in a second direction perpendicular to the first direction,
wherein an angle of the upright surface relative to a plane direction perpendicular to a thickness direction of the transparent resin film is 85° or more and 90° or less,
wherein in the second array region, the first surface includes a plurality of inclined surfaces, and on the first surface, the plurality of inclined surfaces each extend in a third direction, and are separated from and parallel to each other in a fourth direction perpendicular to the third direction,
wherein an angle of the inclined surface relative to the plane direction is 20° or more and 70° or less,
wherein an angle that the first direction and the third direction form on the first surface is 30° or more and 60° or less,
wherein the first half-mirror thin film is disposed on each of the plurality of upright surfaces, and
wherein the second half-mirror thin film is disposed on each of the plurality of included surfaces.

2. The light guide film according to claim 1,
wherein the first half-mirror thin films have an optical reflectivity of 3% or more and 20% or less at a wavelength of 380 nm to 780 nm.

3. The light guide film according to claim 1,
wherein the first half-mirror thin films have a length of 5 µm or more and 100 µm or less in the thickness direction.

4. The light guide film according to claim 1,
wherein an array pitch in the second direction between the plurality of first half-mirror thin films is 3 µm or more and 500 µm or less.

5. The light guide film according to claim 1,
wherein the second half-mirror thin films have an optical reflectivity of 3% or more and 20% or less at a wavelength of 380 nm to 780 nm.

6. The light guide film according to claim 1,
wherein the second half-mirror thin films have a length of 5 µm or more and 100 µm or less in the thickness direction.

7. The light guide film according to claim 1,
wherein an array pitch in the fourth direction between the plurality of second half-mirror thin films is 3 µm or more and 500 µm or less.

8. The light guide film according to claim 1,
wherein a ratio of a luminous transmittance of the light guide film at a wavelength of 380 nm to 780 nm with respect to a luminous transmittance of the transparent resin film at a wavelength 380 nm to 780 nm is 80% or more and 99% or less.

9. The light guide film according to claim 1, further comprising a resin layer,
wherein the resin layer is disposed on the first surface and covers the first half-mirror thin films and the second half-mirror thin films.

10. The light guide film according to claim 9,
wherein a distance in the thickness direction between a surface of the resin layer on an opposite side to the transparent resin film and the first half-mirror thin films is 1 µm or more and 100 µm or less.

11. The light guide film according to claim 9,
wherein a distance in the thickness direction between a surface of the resin layer on an opposite side to the transparent resin film and the second half-mirror thin films is 1 µm or more and 100 µm or less.

12. The light guide film according to claim 9, further comprising: a first low refractive index layer and a second low refractive index layer,
wherein the first low refractive index layer is disposed on a surface of the resin layer on an opposite side to the transparent resin film, and has a lower refractive index than a refractive index of the resin layer, and
wherein the second low refractive index layer is disposed on the second surface, and has a lower refractive index than a refractive index of the transparent resin film.

13. A method of producing the light guide film according to claim 1, the method comprising:
a preparation step of preparing a transparent resin film including a first surface and a second surface opposite to the first surface;
an imprint transfer step of pressing an imprint mold against the first surface of the transparent resin film after the preparation step;
a film formation step of forming a half-mirror layer on the first surface of the transparent resin film after the imprint transfer step; and
a patterning step of patterning the half-mirror layer,
wherein the imprint mold includes a first mold surface and a second mold surface, and the first mold surface corresponds to an uneven-surface shape of the first array region, and the second mold surface corresponds to an uneven-surface shape of the second array region,
wherein in the imprint transfer step, the first mold surface and the second mold surface are pressed against the first surface to form the first array region and the second array region on the first surface, and
wherein in the patterning step, the first half-mirror thin films on the upright surfaces and the second half-mirror thin films on the inclined surfaces are formed from the half-mirror layer.

14. The method according to claim 13, further comprising:
a resin layer formation method of forming a resin layer covering the first half-mirror thin films and the second half-mirror thin films on the first surface.

15. The method according to claim 14, further comprising:
a first low refractive index layer formation step of forming a first low refractive index layer having a lower refractive index than a refractive index of the resin layer on the resin layer.

16. The method according to claim 13, further comprising:
a second low refractive index layer formation step of forming a second low refractive index layer having a lower refractive index than a refractive index of the transparent resin film on the second surface.
